# EUROPEAN PATENT APPLICATION

(11) **EP 2 517 917 A1**
(43) Date of publication of application: **31.10.2012**
(21) Application number: 09852552.0
(22) Date of filing: 24.12.2009
(51) Int. Cl.: B60K 13/04, B60H 1/24, B60K 5/10, B60K 6/46, B60L 11/12, F01N 3/20, F01N 5/02

(54) **ELECTRICALLY POWERED VEHICLE**

(71) Applicant: Toyota Jidosha Kabushiki Kaisha, Toyota-shi, Aichi 471-8571 (JP)
(72) Inventor: SAKAI, Kazuhito, Toyota-shi Aichi 471-8571 (JP); KUMAGAI, Atsunori, Toyota-shi Aichi 471-8571 (JP); OJIMA, Hirotsugu, Toyota-shi Aichi 471-8571 (JP); UTSUMI, Shintaro, Toyota-shi Aichi 471-8571 (JP); TOFUKUJI, Satoko, Toyota-shi Aichi 471-8571 (JP); JINGU, Nobuhisa, Toyota-shi Aichi 471-8571 (JP)
(74) Representative: Intès, Didier Gérard André
(86) International application number: PCT/JP2009/071489
(87) International publication number: WO 2011/077535

(57) **Abstract**

An electrically powered vehicle 1A includes a vehicle body 10A, a battery that is mounted in the vehicle body 10A and is usable for running, and an engine driven type of generator unit that is detachably mounted in the vehicle body 10A and charges the battery 12. In the electrically powered vehicle 1A, at least some of exhaust system assembly components 30A that form an exhaust system of an engine 111 of the generator unit 11 are provided in the vehicle body 10A. Specifically, the electrically powered vehicle 1A is configured to mount, for example, a catalyst 32 out of the exhaust system assembly components 30A in the vehicle body 10A.

## Description

### TECHNICAL FIELD

The present invention relates to electrically powered vehicles, and more particularly, to an electrically powered vehicle in which a generator unit that charges a battery usable for running is detachably mounted.

### BACKGROUND ART

Conventionally, electrically powered vehicles driven by electricity are known. In this regard, as an art considered as being relative to the present invention, Patent Document 1 discloses a road surface finisher configured to detachably have an independently structured unit formed by a first driving assembly having an internal combustion engine and a three-phase generator.
Patent Document 2 discloses an art considered as being relative to the present invention in terms of an arrangement in which an engine is stopped and is then removed from a vehicle in removal of the engine. Patent Documents 3 and 4 disclose arts considered as being relative to the present invention in terms of an arrangement in which the startup and stoppage of an engine are inhibited according to the state of an opening/closing mechanism.
Patent Documents 5 through 9 disclose arts considered as being relative to the invention in terms of sensing gas in a vehicle interior.
Patent Document 10 discloses an art considered as being relative to the invention in terms of a structure in which a generator is mounted.

### PRIOR ART DOCUMENTS

### PATENT DOCUMENTS

Patent Document 1: Japanese Patent Application Publication No. 7-54306;
Patent Document 2: Japanese Patent Application Publication No. 3-204341;
Patent Document 3: Japanese Patent Application Publication No. 2004-204818;
Patent Document 4: Japanese Patent Application Publication No. 10- 141106;
Patent Document 5: Japanese Patent Application Publication No. 9-118198;
Patent Document 6: Japanese Patent Application Publication No. 2002-257728;
Patent Document 7: Japanese Patent Application Publication No. 2008-18740;
Patent Document 8: Japanese Patent Application Publication No. 8-156574;
Patent Document 9: Japanese Patent Application Publication No. 2005-283349; and
Patent Document 10: Japanese Patent Application Publication No. 10-305234.

### SUMMARY OF THE INVENTION

### PROBLEMS TO BE SOLVED BY THE INVENTION

Meanwhile, it may be considered from the drawings of Patent Document 1 that the road surface finisher disclosed therein is configured so that exhaust system assembly components of the internal combustion engine are provided in the independent structure unit. In this case, there is no need to detachably connect the exhaust system assembly components to the internal combustion engine, so that leakage of exhaust gas can be prevented when the independent structure unit is removed or attached.

However, in a case where an engine driven type of generator unit is detachably mounted and the exhaust system assembly components are provided in the generator unit, the removal or attachment work on the generator unit has a larger load resulting from an increased weight. Further, since the exhaust system assembly components are raised to high temperature, there is a need for careful consideration for securely preventing human being from touching the exhaust system assembly components carelessly in light of safety in a case where the exhaust system assembly components are provided to the generator unit detachably mounted. In this regard, it is conceivable that the exhaust system assembly components are accommodated in a housing of the generator unit. However, it is considered that this case has a difficulty in the arrangement of the exhaust system assembly components in a compact structure of the generator unit, and has a problem in light of the heat resistance property of the generator unit.

The present invention was made in view of the above problems, and aims to provide an electrically powered vehicle with an engine driven type of generator unit being detachably mounted capable of reducing the weight load in the attachment or removal work on the generator unit and realizing a compact structure of the generator unit.

### MEANS FOR SOLVING THE PROBLEMS

The present invention for solving the above problems is an electrically powered vehicle comprising: a vehicle body; a battery mounted in the vehicle body and usable for running; and a generator unit of engine driven type that is detachably mounted in the vehicle body and charges the battery, at least some of exhaust system assembly components that form an exhaust system of an engine of the generator unit being mounted in the vehicle body.

The present invention is preferably configured so that the at least some of exhaust system assembly components include a catalyst for cleaning exhaust.

The present invention is preferably configured so that: the catalyst is electrically heated catalyst; and the electrically powered vehicle further comprises: current supply control means for performing a current supply control to the electrically heated catalyst; and current supply inhibiting means for inhibiting the current supply performed by the current supply control means when the generator unit is not mounted in the vehicle body.

The present invention is preferably configured so that the at least some of the exhaust system assembly components includes a heat recovery device that recovers exhaust heat discharged from the engine.

The present invention is preferably configured so that: a vehicle interior is provided in the vehicle body; and gas sensing means for sensing a gas component that leaks from the engine to the vehicle interior, and there is further provided operation restricting control means for performing a control of restricting an operation of at least either the generator unit or vehicle running.

The present invention is preferably configured to further comprise a detachably attaching part that detachably attach the generator unit to the at least some of the exhaust system assembly components, the gas sensing means being provided in a position lower than that of the detachably attaching part.

The present invention is preferably configured to further comprise control content changing means for changing a content of the control performed by the operation restricting control means on the basis of an output of the gas sensing means.

The present invention is preferably configured to further comprise: ventilation control means for ventilating the vehicle interior on the basis of the output of the gas sensing means; and control content changing means for changing a content of the control performed by the ventilation control means on the basis of the output of the gas sensing means.

The present invention is preferably configured so that the control content changing means changes the content of the control performed by the ventilation control means on the basis of a vehicle speed.

The present invention is preferably configured so that: a vehicle interior is provided in the vehicle body; there is provided a partition space part that defines a space with which the vehicle interior communicates and from which the vehicle interior is isolated, and the generator unit is detachably mounted in the partition space part; and there is further provided operation restricting control means for restricting an operation of at least either the generator unit or vehicle running in a case where the vehicle interior and the partition space part communicate with each other.

The present invention is preferably configured to further comprise: opening/closing means for isolating the partition space part from the vehicle interior in an openable/closable state; lock means capable of locking the opening/closing means in a state in which the opening/closing means is in a closed state; and lock control means for locking the lock means to lock the opening/closing means when the generator unit is operating.

The present invention is preferably configured to further comprise control content changing means for performing a control of changing a content of the control performed by the operation restricting control means so as to lower a degree of restriction when the generator unit is not mounted in the vehicle body.

The present invention is preferably configured to further comprise: a detachably attaching part that detachably connects the generator unit to the at least some of the exhaust system assembly components mounted in the vehicle body; and abnormality detecting means capable of detecting whether the detachably attaching part is normally connected.

The present invention is preferably configured to further comprise permission/inhibition deciding means for permitting the operation of the generator unit when the abnormality detecting means detects that the detachably attaching part is normally connected and inhibiting the operation of the generator unit when the abnormality detecting means detects that the detachably attaching part is not connected normally.

The present invention is preferably configured so that wherein a plurality of cylinders are provided in the engine of the generator unit or engines of a plurality of generator units of engine driven type that include said generator unit and are detachably mounted, and wherein the electrically powered vehicle further comprises: operation changing means for performing a control of increasing or decreasing a number of cylinders that are to be operated among the plurality of generator units; and output control mans for performing a control of reducing an output of a cylinder that is operating among the plurality of cylinders when the operation change means increases the number of cylinders to be operated.

### EFFECTS OF THE INVENTION

According to the present invention, it is possible to reduce the weight load in the attachment or removal work on the generator unit of engine driven type and realize a compact structure of the generator unit in a case where the generator unit is detachably mounted.

### BRIEF DESCRIPTION OF THE DRAWINGS

FIG. 1 is a schematic structure diagram of an electrically powered vehicle in accordance with Embodiment 1;
FIG.2 is a diagram of schematically illustrating a generator unit;
FIG. 3 is a flowchart of an operation of a vehicle-side ECU (Electronic Control Unit) in accordance with Embodiment 1;
FIG. 4 is a schematic structure diagram of an electrically powered vehicle in accordance with Embodiment 2;
FIG. 5 is a flowchart of an operation of a vehicle-side ECU in accordance with Embodiment 2;
FIG. 6 is a schematic structure diagram of an electrically powered vehicle in accordance with Embodiment 3;
FIG 7 is a schematic structure diagram of an electrically powered vehicle in accordance with Embodiment 4;
FIG. 8 is a flowchart of an operation of a vehicle-side ECU in accordance with Embodiment 4;
FIG. 9 is a flowchart of an operation of a vehicle-side ECU in accordance with Embodiment 5;
FIG. 10 is a schematic structure diagram of an electrically powered vehicle in accordance with Embodiment 6;
FIG. 11 is a flowchart of an operation of a vehicle-side ECU in accordance with Embodiment 6;
FIG. 12 is a schematic structure diagram of an electrically powered vehicle in accordance with Embodiment 7;
FIG. 13 is a flowchart of a vehicle-side ECU in accordance with Embodiment 7;
FIG. 14 is a schematic structure diagram of an electrically powered vehicle in accordance with Embodiment 8;
FIG. 15 is a diagram of an abnormality detecting part; and
FIG. 16 is a flowchart of an operation of a vehicle-side ECU in accordance with Embodiment 8.

### MODES FOR CARRYING OUT THE INVENTION

Modes for carrying out the invention are now described in conjunction with the drawings.

### Embodiment 1

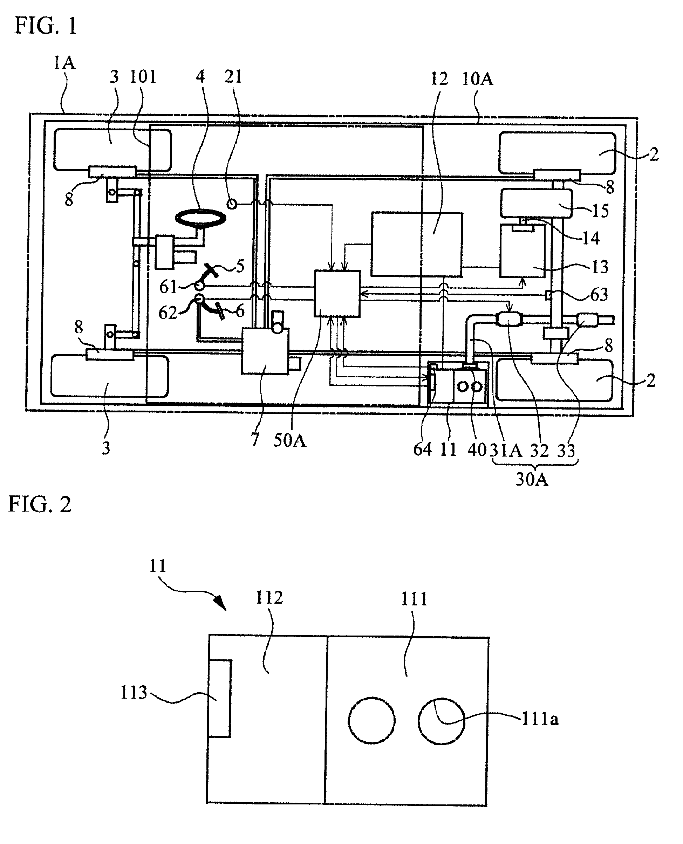

As illustrated in FIG. 1, an electrically powered vehicle 1A in accordance with the present embodiment has a vehicle body 10A in which a generator unit 11, a battery 12 and an electric motor 13 are mounted. The electrically powered vehicle 1A is configured so that the generator unit 11 is detachably mounted. The electrically powered vehicle 1A capable of detachably installing the generator unit 11 can be operated in a state in which the generator unit 11 is not mounted and is electrically disconnected. The electrically powered vehicle 1A is configured so that the generator unit 11 is provided outside of a vehicle interior 101. provided in the vehicle body 10A.

The generator unit 11 is an engine driven type of generator unit, and is equipped, as illustrated in FIG. 2, with an engine 111, a generator 112, and a generator-unit-side ECU 113. The engine 111 drives the generator 112, which generates alternating current. Then, the alternating current thus generated is converted to direct current by a not-illustrated rectifying circuit before being charged in the battery 12. The generator-unit-side ECU 113 is provided for primarily controlling the engine 111. The engine 111 has a plurality of cylinders 111 a (two cylinders in this example), and the electrically powered vehicle 1A has the plurality of cylinders 111a.

As illustrated in FIG. 1, the battery 12 is a direct current battery, and is electrically and detachably connected to the generator unit 11 via high-voltage system wires that are power-system wires. Energy generated by the generator unit 11 is stored in the battery 12 via the high-voltage system wires. The battery 12 may be configured to have multiple batteries having a rated DC voltage of 12 V connected in series, for example. The electric motor 13 is a source for running, and is a DC motor. The electric motor 13 is supplied with energy from the battery 12, and rotates an output shaft 14. Then, the rotary output is transmitted, via a transmission 15, to a pair of right and left rear wheels 2, which are driving wheels, so that the rear wheels 2 can be driven. As described above, the electrically powered vehicle 1A is a series hybrid type of electrically powered vehicle.

The electrically powered vehicle 1A is equipped, in addition to the pair of right and left rear wheels 2 of the driving wheels, with a pair of right and left front wheels 3 that are steering wheels, a handle 4 for manually steering the front wheels 3, an acceleration pedal 5 for changing the number of revolutions of the electric motor 13, a brake pedal 6 and a brake unit 7 for braking the vehicle, and drum brakes 8 coupled with the brake pedal 6 by wires, joined to the brake unit 7 and provided to the front wheels 3 and the rear wheels 2. The acceleration pedal 5 is provided with an acceleration position sensor 26 that senses the amount of depression of the acceleration pedal 5, and the brake pedal 6 is provided with a brake switch 62 that senses whether the brake pedal 6 is depressed or not. In this regard, the acceleration pedal 5 is operation means for issuing a request for running.

The electrically powered vehicle 1A is further provided with a key switch 21. The key switch 21 is a switch that enables selective switching operation between ON and OFF. The key switch 21 is operation means realized to make an operation request to the generator unit 11 and the electric motor 13. Specifically, when the key switch 21 is ON, the operation request is made. When the key switch 21 is OFF, the operation request is not made. Operation means for making an operation request to the generator unit 11 may be provided separately from the key switch 21, for example.

Further, the electrically powered vehicle 1A is equipped with exhaust system assembly components 30A and a detachably attaching part 40. The exhaust system assembly components 30A forms an exhaust system of the engine 111, and includes an exhaust pipe 31a, a catalyst 32, and a muffler 33. The exhaust pipe 31A is composed of a plurality of exhaust pipes which allow exhaust to pass and guides the exhaust to the outside for discharging. The catalyst 32 is provided in the exhaust pipe 31 A and purges the exhaust that passes through the exhaust pipe 31A. Specifically, the catalyst 32 is EHC (Electrically Heated Catalyst) capable of raising the bed temperature of the catalyst 32 by heating through current. The muffler 33 is provided in the exhaust pipe 31 A so as to be located at the downstream side of the catalyst 32, and reduces exhaust noise. The detachably attaching part 40 detachably connects the generator unit to at least components out of the exhaust system assembly components 30A that are mounted in the vehicle body 10A. In this regard, specifically, the detachably attaching part 40 is provided in a portion of the exhaust pipe 31A at the upstream side of the catalyst 32. In the electrically powered vehicle 1A, the exhaust pipe 31 A included in the exhaust system assembly components 30A is mostly provided in the vehicle body 10A together with the catalyst 32 and the muffler 33 also included therein.

Further, the electrically powered vehicle 1A is equipped with a vehicle-side ECU 50A, which is a first control unit. The vehicle-side ECU 50A is equipped with a microcomputer composed of a CPU, a ROM, a RAM and so on, and an input/output circuit, which are not illustrated. The generator-unit-side ECU 113, which is a second control unit, is configured similarly. The generator unit 11 (more specifically, the generator-unit-side ECU 113) is electrically and detachably connected to the vehicle-side ECU 50A. In this regard, the vehicle side ECU 50A and the generator unit 11 are connected together via low-voltage system wires, which are control-system wires. Various objects to be controlled such as the electric motor 13 and the catalyst 32 are electrically connected to the vehicle-side ECU 50A, and further, electrically connected thereto are various sensors and switches such as the key switch 21, the acceleration position sensor 61, the brake switch 62, a vehicle speed sensor 63 for sensing the vehicle speed, and a mount sensor 64 that is a state sensing means capable of sensing whether the generator unit 11 is mounted or not by sensing the generator unit 11 in the mounted state.

The ROM is configured to store a program in which various processes executed by the CPU are described and to store map data. The CPU executes the processes on the basis of the program stored in the ROM while using a temporary memory area ensured in the RAM as necessary, so that various control means, determination means, detection means and calculation means can be functionally realized in the vehicle-side ECU 50A and the generator-unit-side ECU 113.

For example, the vehicle-side ECU 50A functionally realizes current supply control means for controlling a supply of current to the catalyst 32. Specifically, the current supply control means is realized to control the supply of current during an engine cold start.
Further, the vehicle-side ECU 50A functionally realizes current supply inhibiting means for inhibiting the supply of current by the current supply control means when the generator unit 11 is not mounted in the vehicle body 10A.

Further, the vehicle-side ECU 50A functionally realizes operation changing means for performing a control of increasing or decreasing the number of cylinders that are to be operated among the plurality of cylinders 111a.
Further, the vehicle-side ECU 50A functionally realizes output control means for reducing the outputs of the cylinders that are operating among the plurality of cylinders 111a when the operation changing means performs the control of increasing the number of cylinders to be operated among the plurality of cylinders 111a. The output reduction may be specifically implemented by restricting the amount of intake air and the amount of fuel to be injected, for example.
The operation changing means is realized to perform the control of increasing the number of cylinders to be operated among the plurality of cylinders 111a after the output control means performs the control of reducing the outputs.

Meanwhile, the operation changing means is specifically realized to perform a control of increasing or decreasing the number of cylinders that are to be operated among the plurality of cylinders 111a on the basis of the vehicle operating conditions and the amount of charge stored in the battery.
In the control based on the vehicle operating conditions, the operation changing means may be realized to increase the number of cylinders to be operated among the plurality of cylinders 111a when the output of the acceleration position sensor 61 indicates an acceleration position larger than a predetermined value and to decrease the number of cylinders to be operated among the plurality of cylinders 111a when the output of the acceleration position sensor 61 indicates an acceleration position equal to or smaller than the predetermined value.

Also, in the control based on the vehicle operating conditions, the operation changing means may be realized to perform a control of decreasing the number of cylinders to be operated among the plurality of cylinders 111a during a predetermined period of time when the engine is started up under cold conditions.
In this regard, the vehicle-side ECU 50A functionally realizes catalyst warm-up control means for performing an idle operation control during a predetermined period of time in the engine cold start in order to obtain a predetermined output that enables quick warm-up of the catalyst 32, as compared with a case where an idle operation condition is applied when the engine is warmed up. Thus, the predetermined periods of time used in the operation changing means and the catalyst warm-up control means are periods until the bed temperature of the catalyst 32 reaches the activation temperature and the warm-up is completed after the engine cold startup or those until the completion of the warm-up of the catalyst 32 is estimated.
Therefore, the operation changing means is specifically realized to perform the control of decreasing the number of cylinders to be operated among the plurality of cylinders 111a when the catalyst warm-up control means is performing the idle operation control.

In the control based on the amount of charge stored in the battery, the operation changing means may be realized to increase the number of cylinders to be operated among the plurality of cylinders 111a when the amount of charge in the battery is smaller than a predetermined value and to decrease the number of cylinders to be operated among the plurality of cylinders 111a when the amount of charge in the battery is equal to or larger than the predetermined value.

In the control of increasing or decreasing the number of cylinders to be operated among the plurality of cylinders 111a, the operation changing means is realized to switch the operation between an all-cylinder operation and a less-than-all-cylinder operation. In this regard, in the electrically powered vehicle 1A, two cylinders 111a are used in the all-cylinder operation, either one of the two cylinders 111a is used in the less-than-all-cylinder operation.

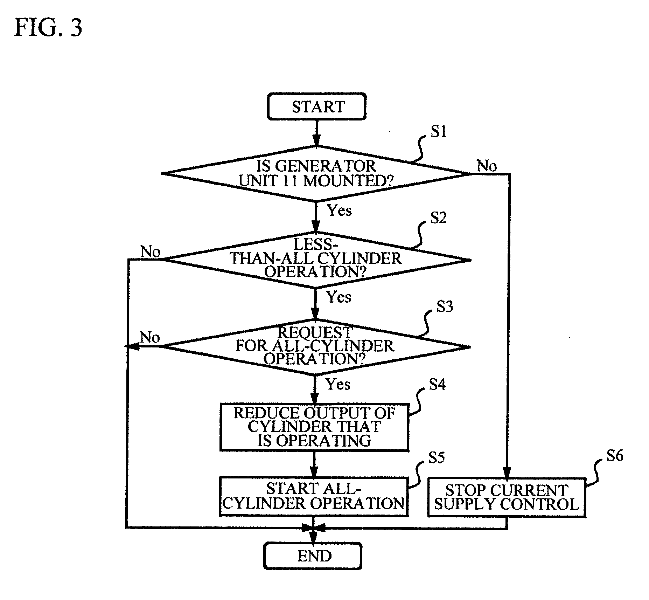

The operation of the vehicle-side ECU 50A is now described in conjunction with a flowchart of FIG. 3. The vehicle-side ECU 50A determines whether the generator unit 11 is mounted in the vehicle body 10A (step S1). When a negative determination is made, the vehicle-side ECU 50A inhibits a supply of current to the catalyst 32 (step S6). Then, the flowchart is ended. In contrast, when a position determination is made in step S1, the vehicle-side ECU 50A determines whether the engine unit 11 is operating with less than all of cylinders (step S2). When a negative determination is made, the present process flow is ended because no specific process is needed. In contrast, when a positive determination is made in step S2, the vehicle-side ECU 50A determines whether a request for the all-cylinder operation is issued (step S3). When a negative determination is made, the present process flow is ended. In contrast, when a position determination is made instep S3, the vehicle-side ECU 50A reduces the output of the cylinder that is operating among the plurality of cylinders 111a (step S4), and thereafter, starts the all-cylinder operation (step S5). The timing at which the process proceeds to step S5 from step S4 may be set appropriately.

Now, a description is given of functions and effects of the electrically powered vehicle 1A. In the electrically powered vehicle 1A, at least some of the exhaust system assembly components 30A are mounted in the vehicle body 10NA. Thus, it is possible to reduce the weight load when the generator unit 11 is mounted in or removed from the electrically powered vehicle 1A. Since some of the exhaust system assembly components 30A are mounted in the vehicle body 10A, there is no need to mount these parts in the generator unit 11, which can be configured to have a compact structure.
In this regard, since the catalyst 32 out of the exhaust system assembly components 30A is mounted in the vehicle body 10A, there is no need to mount the catalyst 32 that may easily lead to an increase in size and weight and the muffler 33 located at the downstream side of the catalyst 32 in the generator unit 11. Therefore, the electrically powered vehicle 1A properly realizes reduction in the weight load in attachment and removal of the generator unit 11 and downsizing of the generator unit 11.

Since the electrically powered vehicle 1A is configured to mount the catalyst 32 in the vehicle body 10A, there is no need to supply current to the catalyst 32 when the generator unit 11 is not mounted in the vehicle body 10A. Thus, the electrically powered vehicle 1A is capable of preventing unnecessary control of a current supply to the catalyst 32 from being mistakenly performed in the case where the generator unit 11 is not mounted in the vehicle body 10A because the catalyst 32 out of the exhaust system assembly components 30A is mounted in the vehicle body 10A.

The electrically powered vehicle 1A reduces the outputs of the cylinders that are operating when the operation is switched to the all-cylinder operation from the less-than-all-cylinder operation. In this regard, the switching from the less-than-all-cylinder operation to the all-cylinder operation raises the bed temperature of the catalyst 32. As a result, the fuel injection amount is increased to lower the bed temperature of the catalyst 32 when the bed temperature of the catalyst 32 reaches an OT increase range. When the electrically powered vehicle 1A changes the operation from the less-than-all-cylinder operation to the all-cylinder operation, the outputs of the cylinders that are operating are reduced to lower the bed temperature of the catalyst 32. Thus, the electrically powered vehicle 1A is capable of preventing unnecessary fuel consumption and improving fuel economy, and is capable of further improving environmental performance although the electrically powered vehicle 1A is originally required to have high environmental performance.

### Embodiment 2

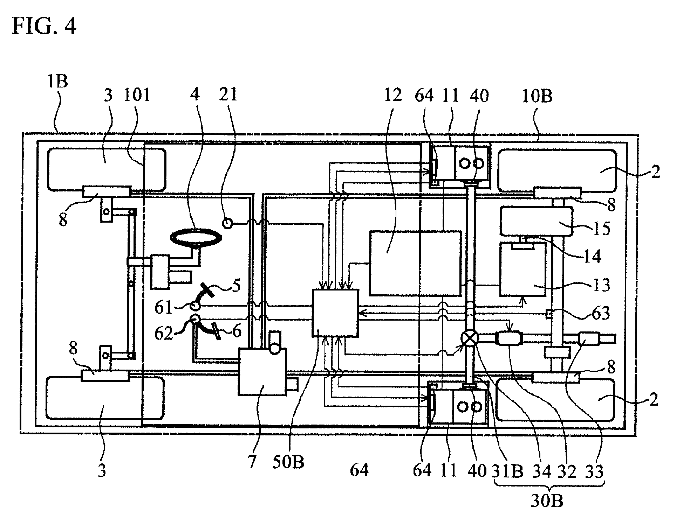

As illustrated in FIG. 4, an electrically powered vehicle 1B in accordance with the present embodiment is substantially the same as the electrically powered vehicle 1A except that a vehicle body 10B in which a plurality of generator units (two generator units in this embodiment) is substituted for the vehicle body 10A, and there are provided a plurality (two in this embodiment) of detachably attaching parts 40 and mount sensors 64 respectively associated with the plurality of generator units 11 and that exhaust system assembly components 30B are substituted for the exhaust system assembly components 30A and a vehicle-side ECU 50B is substituted for the vehicle-side ECU 50A. The exhaust system assembly components 30B are substantially the same as the exhaust system assembly components 30A except that an exhaust pipe 31B is substituted for the exhaust pipe 31A and a switch valve 34 is further provided.

The exhaust pipe 31B is composed of a plurality of exhaust pipes, which are provided so as to join exhausts of the engines 111 respectively installed in the generator units 11. Specifically, the exhaust pipe 31B is provided so that exhaust joining portions of the engines 111 are located at the upstream side of the catalyst 32.
The switch valve 34 is provided in the exhaust pipe 31B and is located in each joining portion so as to switch over between permission and inhibition for each of exhaust passages respectively associated with the generator units 11 (more specifically, engines 111). Specifically, the switch valve 34 is capable of permitting the passage of exhaust from each of the generator units 11 or permitting the passage of exhaust only from either one of the generator units 11.
The detachably attaching parts 40 detachably connect the generator units 11 to at least components out of the exhaust system assembly components 30B mounted in the vehicle body 10B. Specifically, the detachably attaching parts 40 are respectively provided in branch portions of the exhaust pipe 31B located at the upstream side of the joining position. In the electrically powered vehicle 1B, the exhaust pipe 31B is mostly provided in the vehicle body 10B together with the catalyst 32, the muffler 33 and the switch valve 34 out of the exhaust system assembly components 308.

The vehicle-side ECU 50B is substantially the same as the vehicle-side ECU 50A except that the two generator units 11 and the mount sensors 64 are electrically connected and the switch valve 34 is electrically connected and that the operation changing means and the current supply inhibiting means are functionally realized as described below and switch control means described below is further realized functionally.
The vehicle-side ECU 50B functionally realizes performs a control of increasing or decreasing the number of cylinders that are to be operated among the plurality of cylinders 111a, and more specifically, performs a control of switching the operation between a case where all the generator units 11 are operated and a case where one of the generator units 11 is operated. Except this point, the operation changing means is realized in a similar manner to that of the vehicle-side ECU 50A.
The current supply inhibiting means is realized to inhibit the current supply control by the current supply control means when all of the generator units 11 is not mounted in the vehicle body 10B.
The switch control means is realized to control the switch valve 34 to allow the passage of only exhaust from the generator unit mounted in the vehicle body 10B among the generator units. In this regard, more specifically, the switch control means is realized to control the switch valve 34 to allow the passage of only exhaust from the generator unit that is operating among the generator units 11.

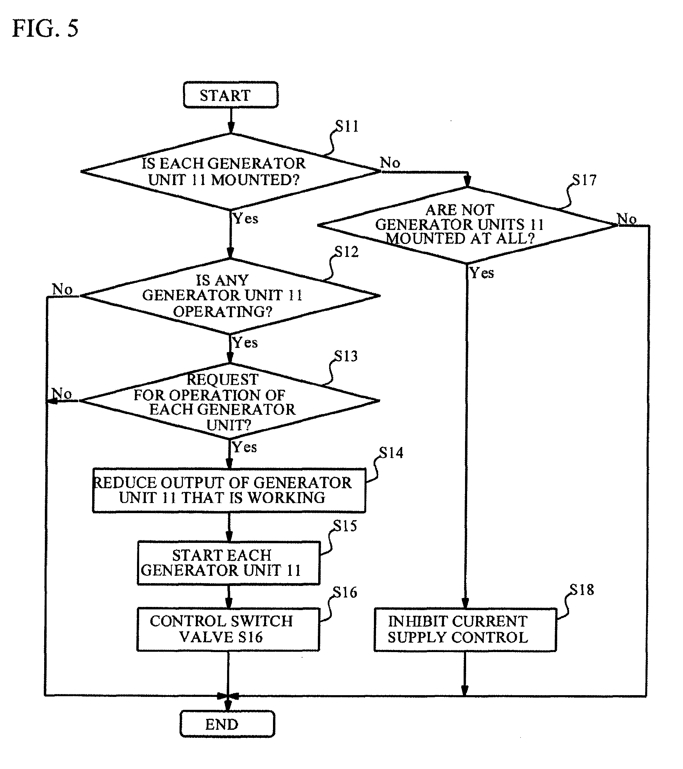

An operation of the vehicle-side ECU 50B is now described in conjunction with a flowchart of FIG. 5. The vehicle-side ECU 50B determines whether each of the generator units 11 is mounted in the vehicle body 10B (step S11). When a negative determination is made, the vehicle-side ECU 50B determines whether the generator units 11 are not mounted at all (step S 17). When a positive determination is made, the vehicle-side ECU 50B inhibits the supply of current to the catalyst 32 (step S 18). In contrast, when a negative determination is made, the present process flow is ended because no specific process is needed.

When a positive determination is made in step S 11, the vehicle-side ECU 50B determines whether any of the generator units 11 is operating (step S12). When a negative determination is made, the present process flow is ended. In contrast, when a positive determination is made, the vehicle-side ECU 50B determines whether a request for operating each of the generator units 11 is issued (step S13). When a negative decision is made, the present process flow is ended. In contrast, when a positive decision is made at step S13, the vehicle-side ECU 50B performs a control of reducing the output of the generator unit 11 that is operating (step S 14). After that, the vehicle-side ECU 50B starts the operation of each generator unit 11 (step S15) and controls the switch valve 34 to allow the passage of exhausts from the generator units 11 that are operating (step S16).

A description is now given of functions and effects of the electrically powered vehicle 1B. The electrically powered vehicle 1B is configured to mount at least some of the exhaust system assembly components 30B in the vehicle body 10B. Therefore, the electrically powered vehicle 1B also realizes reduction in the weight load in attachment and removal of the generator units 11 and downsizing of the generator units 11.
In this regard, the electrically powered vehicle 1B properly realizes reduction in the weight load in attachment and removal of the generator units 11 and downsizing of the generator units 11 because the catalyst 32 is provided in the vehicle body 10B, more specifically, the detachably attaching parts 40 are provided in branch portions of the exhaust pipe 31B, and the catalyst 32, the muffler 33 and the switch valve 34 are provided in the vehicle body 10B.
Further, the electrically powered vehicle 1B is configured to have the detachably attaching parts 40 provided in the branch portions of the exhaust pipe 31, so that the generator units 11 can be mounted or removed individually, and the convenience can be improved.

Meanwhile, in the electrically powered vehicle 1B, because of the installation of the catalyst 32 in the vehicle body 10B, the exhaust is directly emitted to the outside via the branch portion of the exhaust pipe 31B associated with the generator unit 11 that is not mounted when the electrically powered vehicle 1B is operating with only some generator units being mounted in the vehicle body 10B. However, the electrically powered vehicle 1B is equipped with the switch valve 34, so that the passage of the exhaust can be prevented from being emitted without passing through the catalyst 32 even when only some of the generator units are mounted in the vehicle body 10B to generate power. Since the direct emission of the exhaust to the outside is prevented, the electrically powered vehicle 1B is capable of improving the environmental performance.

Further, the electrically powered vehicle 1 B prevents the current supply control to the catalyst 32 when the plurality of the generator units 11 are not mounted in the vehicle body 10B at all. Thus, like the electrically powered vehicle 1A, the electrically powered vehicle 1B is capable of further preventing the unnecessary current supply control to the catalyst 32.
The electrically powered vehicle 1B reduces the output of the generator unit 11 that is operating when the operation is changed from a state in which any one of the generator units among all the generator units 11 is operating to another state in which all of the generator units are operating. Thus, the electrically powered vehicle 1B is capable of improving the fuel economy and enhancing the environmental performance like the electrically powered vehicle 1B.

### Embodiment 3

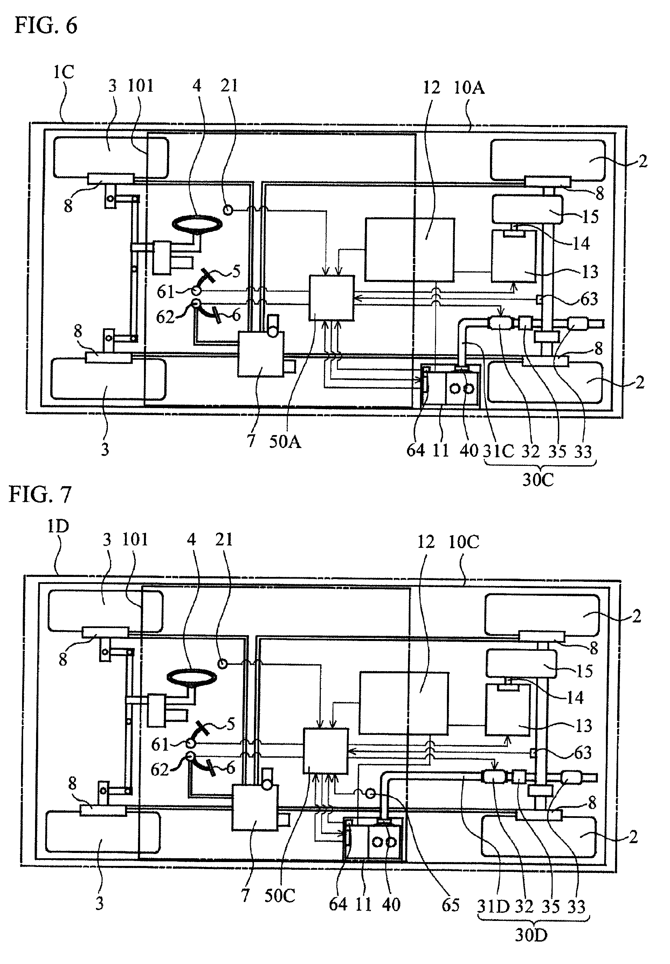

As depicted in FIG. 6, an electrically powered vehicle 1C of the present embodiment is substantially the same as the electrically powered vehicle 1A except that exhaust system assembly components 30C are substituted for the exhaust system assembly components 30A. A similar change may be applied to the electrically powered vehicle 1B. The exhaust system assembly components 30C are substantially the same as the exhaust system assembly components 30A except that there is further provided a heat recovery device 35, and an exhaust pipe 31 associated therewith is substituted with the exhaust pipe 31A. The electrically powered vehicle 1C is configured so that components out of the exhaust system assembly components 30C mounted in the vehicle body 10A include the heat recovery device 35. Specifically, the heat recovery device 35 is provided in a portion of the exhaust pipe 31 located at the downstream side of the catalyst 32 and at the upstream side of the muffler 33. Specifically, the heat recovery device 35 may be a thermal exchanger or an exhaust driven type of turbine.

A description is now given of functions and effects of the electrically powered vehicle 1C. The electrically powered vehicle 1C is capable of efficiently utilizing thermal energy recovered by the heat recovery device 35 and thus improving the fuel economy, and is capable of realizing higher environmental performance than that of the electrically powered vehicle 1C. In this regard, the electrically powered vehicle 1C is configured to mount the heat recovery device 35 in the vehicle body 10A in which some components of the exhaust system assembly components 30C are mounted. Thus, the electrically powered vehicle 1C has higher environmental performance than that of the electrically powered vehicle 1A, and realizes reduction in the weight load in the attachment and removal work on the generator unit 11 and downsizing of the generator unit 11.

### Embodiment 4

As depicted in FIG. 7, an electrically powered vehicle 1D in accordance with the present embodiment is substantially the same as the electrically powered vehicle 1C except that a vehicle body 10C in which the generator unit 11 is detachably mounted in the vehicle interior 101 is substituted for the vehicle body 10A, and exhaust system assembly components 30D are substituted for the exhaust system assembly components 30C and that a gas sensor 65 is provided and a vehicle-side ECU 50C is substituted for the vehicle-side ECU 50A. The exhaust system assembly components 30D are substantially the same as the exhaust system assembly components 30C except that an exhaust pipe 31D is substituted for the exhaust pipe 31C. The exhaust pipe 31D is substantially the same as the exhaust pipe 31C except that the exhaust pipe 31D is provided in association with the generator unit 11, which is detachably mounted in the vehicle interior 101. A similar change may be applied to the electrically powered vehicles 1A and 1B, for example.

The gas sensor 65 is provided in the vehicle interior 101, and is more specifically provided in a position lower than the detachably attaching part 40. The gas sensor 65 senses gas components that leak out from the engine 111 to the vehicle interior 101. The gas components that leak out from the engine 111 are exhaust gas compositions including unburned fuel components such as CO, CO₂ NOₓ, SOₓ and HC. In this regard, more specifically, the gas sensor 65 is configured to have a group multiple sensors that sense different gas components. The gas sensor 65 is not limited to the above but may be a single sensor that senses at least any one of the gas components that leaks out from the engine 111. The gas sensor 65 corresponds to gas sensing means.

The vehicle-side ECU 50C is substantially the same as the vehicle-side ECU 50A except that the gas sensor 65 is further connected thereto, and operation restricting control means described below is functionally realized.
The operation restricting control means may be realized to perform a control of, for example, restricting the operation of at least one of the generator unit 11 and the vehicle running on the basis of the output of the gas sensor 65 (hereinafter, referred to as an operation restricting control). In this regard, the operation restricting means may be realized to perform the operation restricting control of the generator unit 11 and that of the vehicle running.
In the operation restricting control based on the output of the gas sensor 65, specifically, the operation restricting means may be realized to restrict the operation when a gas component is detected. In this regard, it is possible to determine whether a gas component is detected by using a change of the output of the gas sensor 65 influenced by the gas component.

In the operation restricting control of the generator unit 11, the operation restricting means may be realized to perform a control of, for example, changing the operation condition of the generator unit 11 (specifically, engine 111) so that the detected gas component can be reduced (hereinafter, referred to as an operation condition changing control). In this regard, in view of a fact that the exhaust gas components change responsive to a change of the combustion temperature of the engine 111, the operation condition changing control may be a control of stopping fuel injection, a control of changing the fuel injection amount, ignition timing, or the intake air amount, or a control of changing the amount of recirculated exhaust when an exhaust gas recirculation is employed.
In the control of the operation restricting control of the generator unit 11, the operation restricting control means may be realized to perform a control of, for example, stopping the operation of the generator unit 11 (hereinafter, referred to as operation stop control).
Meanwhile, in the operation restricting control of the vehicle running, the operation restricting control means may be realized to perform a control of, for example, inhibiting the vehicle running (hereinafter, referred to as running inhibit control). In this regard, in the running inhibit control, the operation restricting control means may be realized to perform a control of, for example, stopping the drive of the electric motor 13 at the time of the vehicle startup (specifically, when the key switch 21 is turned ON).

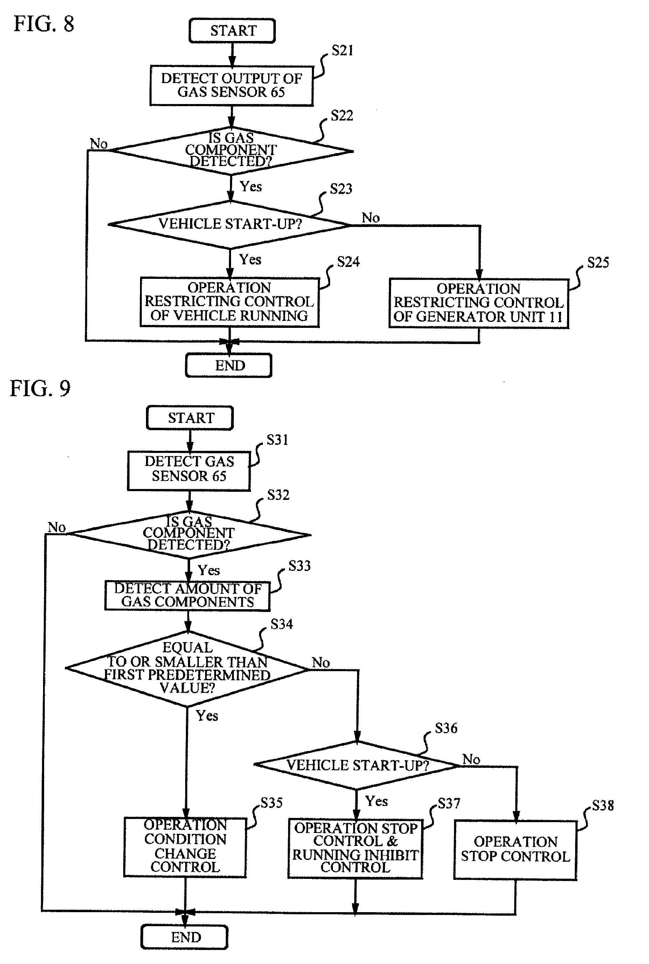

A description is now given of an operation of the vehicle-side ECU 50 in conjunction with a flowchart of FIG. 8. The vehicle-side ECU 50C detects the output of the gas sensor 65 (step S21), and determines whether a gas component is detected (step S22). When a negative determination is made, the present process flow is ended. In contrast, when a positive determination is made in step S22, the vehicle-side ECU 50C determines whether the vehicle is started up (step S23). When a positive determination is made, the vehicle-side ECU 50C performs the operation restricting control of the vehicle running (step S24). In this case, the operation restricting control of the generator unit 11 may further be carried out. In contrast, when a negative determination is made in step S23, the vehicle-side ECU 50C performs the operation restricting control of the generator unit 11 (step S25).

A description is now given of functions and effects of the electrically powered vehicle 1D. The electrically powered vehicle 1D may have a possibility of the occurrence of exhaust leakage occurs when the generator unit 11 is improperly mounted in or removed from the vehicle body 10C because at least some of the exhaust system assembly components 30 are mounted in the vehicle body 10C. In this regard, since the electrically powered vehicle 1D is configured to mount the generator unit 11 in the vehicle interior 101, the occurrence of exhaust leakage may result in a possibility that the user may breathe in a large amount of harmful gas components.
However, since the operation restricting control of the generator unit 11 is carried out when a gas component is detected, the electrically powered vehicle 1D is capable of reducing the gas component detected or stopping the exhaust. Therefore, the electrically powered vehicle I D has enhanced safety against the exhaust leakage, as compared with the electrically powered vehicle 1A.

Further, the electrically powered vehicle 1D is capable of preventing the vehicle operation from continuing with the exhaust leakage before it happens because the operation restricting control of the vehicle running is executed when a gas component is detected at the time of vehicle start-up. This also enhances the safety of the electrically powered vehicle 1D against the exhaust leakage. In this case, by further performing the operation restricting control of the generator unit 11, the safety against the exhaust leakage can be further enhanced.
Since the electrically powered vehicle 1D is configured to mount the gas sensor 65 in a position lower than the detachably attaching part 40, it is possible to effectively detect harmful gas components that have large molecular weights and stay in the vehicle interior 101. This also enhances the safety of the electrically powered vehicle 1D against the exhaust leakage because the harmful gas components are prevented from staying in the vehicle interior 101.

### Embodiment 5

An electrically powered vehicle I E in accordance with the present embodiment is substantially the same as the electrically powered vehicle 1D except that a vehicle-side ECU 50D is substituted for the vehicle-side ECU 50C. Therefore, an illustration of the electrically powered vehicle 1E is omitted.
The vehicle-side ECU 50D is substantially the same as the vehicle-side ECU 50C except that control content changing means is functionally realized additionally.
The control content changing means is realized to change the content of the control performed by the control restricting control means on the basis of the output of the gas sensor 65. Further, the control content changing means is realized to change the content of the control performed by the operation restricting control means on the basis of the presence/absence of an operation request to the electric motor 13 and the presence/absence of a request for vehicle running (specifically, the outputs of the key switch 21 and the acceleration position sensor 61).

Specifically, the control content changing means is realized to change the content of the operation restricting control of the generator unit 11 on the basis of the output of the gas sensor 65. Specifically, the control content changing means is also realized to change the content of the operation restricting control of the generator unit 1 between the operation condition changing control and the operation stop control.
Specifically, the control content changing means is realized to change the content of the operation restricting control of the vehicle running on the basis of the outputs of the gas sensor 65, the key switch 21 and the acceleration position sensor 61. The control content changing means is specifically realized to change the content of the operation restricting control of the vehicle running between a case where the running inhibit control is performed and another case where the running inhibit control is not performed.

In the change of the content of the control based on the output of the gas sensor 65, the control content changing means is realized to change the content of the control executed by the operation restricting control means on the basis of the amount of the detected gas components. In this regard, the amount of the gas components may be detected from the output of the gas sensor 65 that depends on the amount of the gas components.
The control content changing means is realized to strength the operation restriction as the amount of the detected gas components increases. Specifically, the control content changing means is realized to increase the degree of restriction of the operation restricting control performed by the operation restricting control means as the amount of the detected gas components increases so that the operation restriction can be strengthened.

In this regard, the control content changing means is realized to cause the operation restricting control means to perform the operation condition changing control when the amount of the gas components detected is equal to or smaller than a first predetermined value, and to cause the operation restricting control means to perform the operation stop control when the amount of the gas components detected is larger than the first predetermined value.
At the time of the engine start-up, the control content changing means is realized to cause the operation restricting control means not to perform the running inhibit control when the amount of the detected gas components is equal to or smaller than the first predetermined value and to cause the operation restricting control means to perform the running inhibit control when the amount of the detected gas components is larger than the first predetermined value.
In the change of the content of the control based on the output of the gas sensor 65 performed by the operation restricting control means may be realized to change the content of the control performed by the operation restricting control means on the basis of the type of gas components.

A description is now given of an operation of the vehicle-side ECU 50D in conjunction with a flowchart of FIG. 9. The vehicle-side ECU 50D detects the output of the gas sensor 65 (step S31), and determines whether a gas component is detected (step S32). When a negative determination is made, the present flow process is ended. In contrast, when a positive determination is made in step S32, the vehicle-side ECU 50D detects the amount of gas components (step S33), and determines whether the amount of the detected gas components is equal to or smaller than the first predetermined value (step S34). When a positive determination is made, the vehicle-side ECU 50D performs the operation condition changing control (step S35). In this case, the running inhibit control is not performed even at the time of the engine start-up. In contrast, when a negative determination is made in step S34, the vehicle-side ECU 50D determines whether the vehicle is started up (step S36). When a positive determination is made, the vehicle-side ECU 50D performs the operation stop control and the running inhibit control (step S37). In contrast, when a negative determination is made in step S36, the vehicle-side ECU 50D performs the operation stop control (step S38).

A description is now given of functions and effects of the electrically powered vehicle 1E. The electrically powered vehicle 1E changes the content of the control performed by the operation restricting control means on the basis of the output of the gas sensor 65. Thus, in the electrically powered vehicle 1E, restricted generation of power is allowed in a case where the degree of necessity for securing safety against the exhaust leakage is low, whereby the battery 12 can be continuously charged and running for evacuation can be enabled reliably, as compared with a case where the generation of power is stopped.
When the degree of necessity for securing safety against the exhaust leakage is low in the electrically powered vehicle 1E, the vehicle operation is allowed at the time of the vehicle start-up, whereby it is possible to avoid the occurrence of a situation in which there is no way to give up the vehicle in the place where the user is.
Thus, the electrically powered vehicle 1E is capable of appropriately realizing both the safety against the exhaust leakage and the permission of vehicle running.

### Embodiment 6

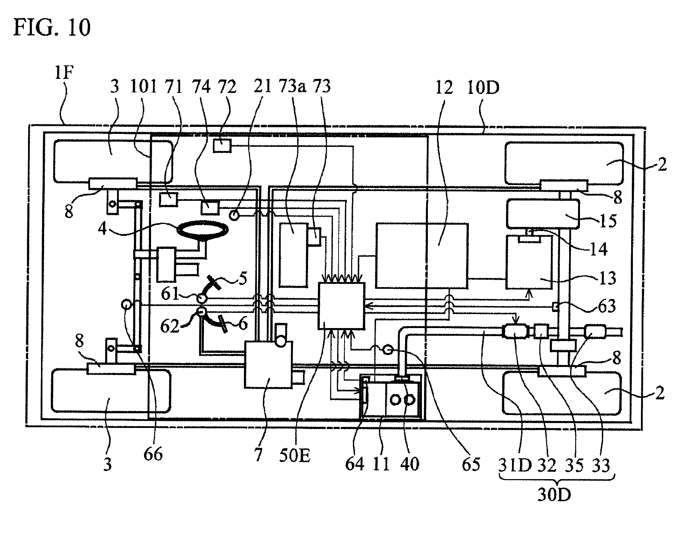

As illustrated in FIG. 10, an electrically powered vehicle in accordance with the present embodiment is substantially the same as the electrically powered vehicle 1C except that the generator unit 11 is mounted in the vehicle interior 101 and exhaust system assembly components 30D associated therewith are substituted for the exhaust system assembly components 30C and that provided are the gas sensor 65, a raindrop sensor 66, a ventilator 71, a power window device 72, an electric sunroof device 73, and a wiper device 74, and except that a vehicle body 10D with the electric sunroof device 73 is substituted for the vehicle body 10C and a vehicle-side ECU 50E is substituted for the vehicle-side ECU 50A. A similar change may be applied to the electrically powered vehicle 1A or 1B.

The generator unit 11, the exhaust system assembly components 30D and the gas sensor 65 are provided as in the case of the electrically powered vehicle 1D of the Embodiment 4.
The raindrop sensor 66 is provided in the vehicle body 10D and senses raindrops.
The ventilator 71 is provided in the vehicle body 10D, and executes or stops ventilation of the vehicle interior 101 with the exterior. Specifically, the ventilator 71 may be an air conditioner, for example. However, the ventilator 71 is not limited to the above but a dedicated ventilator 71 may be separately provided in the vicinity of the generator unit 11.
The power window device 72 is provided in the vehicle body 10D, and is configured to open and close not-illustrated door windows provided in the vehicle interior 101.
The electric sunroof device 73 is provided in the vehicle body 10D, and is configured to open and close a sunroof window 73a provided in the ceiling of the vehicle interior 101 by electricity.
The wiper device 74 is provided in the vehicle body 10D, and is configured to remove raindrops attached to a not-illustrated front window.

The vehicle-side ECU 50E is substantially the same as the vehicle-side ECU 50A except that electrically connected to the vehicle-side ECU 50E are the gas sensor 65, the raindrop sensor 66, the ventilator 71, the power window device 72, the electric sunroof device 73 and the wiper device 74 and that ventilation control means, control content changing means and alarm control means described below are functionally realized.

The ventilation control means is realized to perform a control of ventilating the vehicle interior 101 on the basis of the output of the gas sensor 65 (hereinafter, referred to as ventilation control). The ventilation control means is realized to control the ventilator 71 to ventilate the vehicle interior 101 as ventilation means. The ventilation control means is realized to control the power window device 72 to open a door window as ventilation control. The ventilation control means is realized to control the electric sunroof device 73 to open the sunroof window 73a as ventilation means.

The vehicle-side ECU 50E is realized so that the control content changing means changes the content of the ventilation control performed by the ventilation control means on the basis of the output of the gas sensor 65.
More specifically, the control content changing means is realized to change the content of the ventilation control on the basis of the amount of the detected gas components.
In this regard, the control content changing means is realized to increase the degree of ventilation as the amount of the detected gas components increases. Specifically, the control content changing means is realized to use the combination of a larger number of ventilation controls by the ventilation control means and to thus increase the degree of ventilation as the amount of the detected gas components increases.
The control content changing means is realized to increase the degree of ventilation by causing the ventilation control means to control the ventilator 71, the electric sunroof device 73 when the amount of the detected gas components is equal to or smaller than the first predetermined value and by causing the ventilation control means to control the ventilator 71, the power window device 72 and the electric sunroof device 73 when the amount of the detected gas components is larger than the first predetermined value.

The control content changing means is realized to change the content of the ventilation control. Specifically, the control content changing means is realized to change the content of the ventilation control by preventing the ventilation control means from controlling the power window device 72 when the vehicle is running at high speeds even in a case where the ventilation control means should control the power window device 72 (in other words, in a case where the amount of the detected gas components is larger than the first predetermined value). In this regard, the case where the vehicle is running at high speeds corresponds to a case where the vehicle speed is higher than a predetermined value (for example, 80 km/h).
With regard to the change of the content of the ventilation control as described above, the alarm control means is functionally realized to perform the alarm control for outputting an alarm to urge ventilation when the vehicle is running at high speeds and the ventilation control means should control the power window device 72.

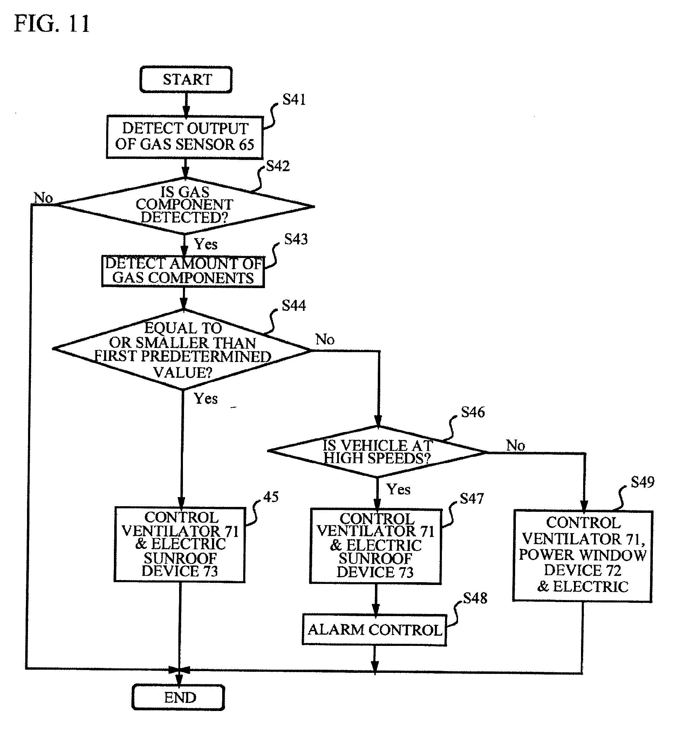

A description is now given of an operation of the vehicle-side ECU 50E in conjunction with a flowchart of FIG. 11. The vehicle-side ECU 50E detects the output of the gas sensor 65(step S41), and determines whether a gas component is detected (step S42). When a negative determination is made, the flow process is ended. In contrast, when a positive determination is made in step S42, the vehicle-side ECU 50E detects the amount of gas components (step S43), and determines whether the amount of the detected gas components is equal to or smaller than the first predetermined value (step S44). When a positive determination is made, the vehicle-side ECU 50E controls the ventilator 71 and the electric sunroof device 73 for the ventilation control (step S45).

In contrast, when a negative determination is made in step S44, the vehicle-side ECU 50E determines whether the vehicle is running at high speeds (step S46). When a positive determination is made, the vehicle-side ECU 50E controls the ventilator 71 and the electric sunroof device 73 for ventilation control (step S47), and performs the alarm control for urging ventilation (step S48). In contrast, when a negative determination is made in step S46, the vehicle-side ECU 50E controls the ventilator 71, the power window device 72 and the electric sunroof device 73 for ventilation control (step S49).

A description is now given of functions and effects of the electrically powered vehicle 1F The electrically powered vehicle 1F changes the content of the control performed by the ventilation control means on the basis of the gas sensor 65. Thus, the electrically powered vehicle 1F is capable of performing appropriate ventilation based on the degree of necessity for securing the safety against fuel leakage.
When the vehicle is running at high speeds, the ventilation control means is prevented from controlling the power window device 72 even in a case where the ventilation control means should control the power window device 72. Thus, the electrically powered vehicle 1F is capable of preventing the vehicle driving from being affected by sudden strong wind that blows into the vehicle interior 101 through a door window when the vehicle is running at high speeds, and is capable of securing the safety of driving the vehicle.
In the above case, the electrically powered vehicle 1F is capable of urging the user to voluntarily ventilate by instead performing the alarm control for urging ventilation, so that the safety of vehicle driving can be secured and the safety against the exhaust leakage can be secured.
As described above, the electrically powered vehicle 1F is capable of performing the appropriate ventilation process against the exhaust leakage, and is further capable of appropriately realizing both the safety against the exhaust leakage and the allowance of vehicle running.

The control content changing means may be realized to change the content of the ventilation control by further referring to the output of the raindrop sensor 66 and the operating conditions of the wiper device 74. Specifically, the control content changing means may be realized to change the content of the ventilation control by preventing the ventilation control means from controlling the power window device 72 and the electric sunroof device 73 when it is determined that it is raining on the basis of the output of the raindrop sensor 66, or when the wire device 74 is working, even if the ventilation control means should control the power window device 72 or the electric sunroof device 73. Also, in this case, the alarm control means instead performs the control of urging an alarm. It is thus possible to secure the safety against the exhaust leakage while simultaneously securing the safety of the vehicle running or comfortability.

A change similar to that applied to the electrically powered vehicle 1F based on the electrically powered vehicle 1C may be applied to the electrically powered vehicles 1D or 1E of Embodiment 4 or 5. In this case, the safety against the exhaust leakage can further be enhanced not only in a case where exhausting is not stopped by executing the operation condition changing control but also in a case where the gas components actually detected are positively exhausted to the outside of the vehicle interior 101.
Also, in this case, in the operation stop control performed when the vehicle is running, the control content changing means may be configured to change the content of the control performed by the operation restricting control means so as not to perform the operation stop control when the battery charge amount is smaller than the predetermined value even in a case where the operation stop control should be performed and to change the content of the control performed by the ventilation control means so as to further perform the ventilation control in a case where the ventilation control means should not perform the ventilation control. It is thus possible to secure the safety against the exhaust leakage while simultaneously securing the safety of the vehicle running or comfortability.

In contrast, in this case, the control content changing means may be configured to selectively change any of, for example, the content of the operation restricting control of the generator unit 11, the content of the operation restricting control of the vehicle running, and the content of the ventilation control on the basis of the output of the gas sensor 65. In this case, the control content changing means may be configured to selectively change any of the contents of the controls in accordance with the type of gas components detected, for example. This case is beneficial because the safety against the exhaust leakage can be suitably secured in accordance with the type of the gas components detected.

### Embodiment 7

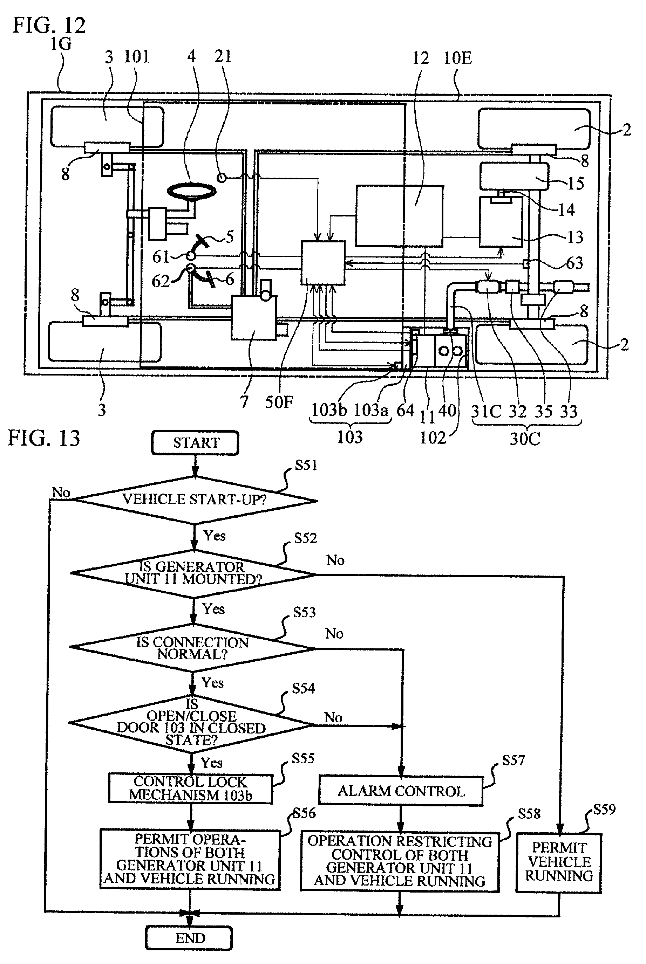

As illustrated in FIG. 12, an electrically powered vehicle 1G in accordance with the present embodiment is substantially the same as the electrically powered vehicle 1E except that a vehicle body 10E with a partition space part 102 in which the generator unit 11 is mounted, and an opening/closing mechanism 103 is further provided and that a vehicle-side ECU 50F is substituted for the vehicle-side ECU 50A. A similar change may be applied to, for example, the electrically powered vehicles 1A and 1B.

The partition space part 102 is provided in the vehicle body 10E, and defines a space that communicates with or is isolated from the vehicle interior 101 by the opening/closing mechanism 103.
The opening/closing mechanism 103 is equipped with an open/close door 103a, a lock mechanism 103b, and a not-illustrated state detecting sensor, and is configured so that the vehicle interior 101 and the partition space part 102 communicate with or be isolated from each other. The open/close door 103a corresponds to open/close means for isolating the partition space part 102 from the vehicle interior 101 and making a communication therebetween. The lock mechanism 103b corresponds to lock means configured to lock the open/close door 103a that is in the closed state. The state detecting sensor corresponds to state detecting means capable of detecting the open/close state of the open/close door 103a by detecting the closed sate of the open/close door 103a.

The vehicle-side ECU 50F is substantially the same as the vehicle-side ECU 50A except that the opening/closing mechanism 103 (specifically, the lock mechanism 103b and the state detecting sensor) is electrically connected, and operation restricting control means, control content changing means, alarm control means, and lock control means described below are functionally realized.
The operation restricting control means is realized to perform an operation restricting control of at least one of the generator unit 11 and the vehicle running in a state where the vehicle interior 101 and the partition space part 102 communicate with each other (that is, the open/close door 103a is in the opened state). The operation restricting control means is realized to perform the operation restricting control of at least one of the generator unit 11 and the vehicle running in a case where the generator unit 11 is mounted and an abnormality occurs in the connection of the high-voltage-system wires. A determination as to whether an abnormality occurs in the connection of the high-voltage-system may be made by determining whether a short-circuit takes place in the high-voltage-system wires through the generator-unit-side ECU 113.

The operation restricting control means is realized to perform the operation restricting control of both the generator unit 11 and the vehicle running.
In the operation restricting control of the generator unit 11, specifically, the operation restricting control means is realized to perform the operation stop control. In this regard, specifically, the operation restricting control means is realized to perform the operation restricting control at the time of the vehicle start-up.
In the operation restricting control of the vehicle running, specifically, the operation restricting control means is realized to perform the running inhibit control. In this regard, specifically, the operation restricting control means is realized to perform the running inhibit control by inhibiting the drive of the electric motor 13 at the time of the vehicle start-up.

The control content changing means is realized to change the content of the control performed by the operation restricting control means so as to lower the degree of restriction when the generator unit 11 is not mounted in the vehicle body 10E.
Specifically, the control content changing means is realized to perform the control of changing the content of the control performed by the operation restricting control means so as to lower the degree of restriction by inhibiting the execution of the operation restricting control of the vehicle running in the case where the generator unit 11 is not mounted in the vehicle body 10E even when the open/close door 103a is in the opened state.
The alarm control mans is realized to perform an alarm control of outputting an alarm when the operation restricting control means performs the operation restricting control.
The lock control means is realized to control the lock mechanism 103b to lock the open/close door 103a in the closed state when the generator unit 11 is working.

A description is now given of an operation of the vehicle-side ECU 50F in conjunction with a flowchart of FIG. 13. The vehicle-side ECU 50F determines whether the vehicle is started up (step S51). When a negative determination is made, no specific process is needed and the present flow process is ended. In contrast, when a positive determination is made in step S51, the vehicle-side ECU 50F determines whether the generator unit 11 is mounted in the vehicle body 10E (step S52). When a positive determination is made, the vehicle-side ECU 50F determines whether the connection of the high-voltage-system wires is normal (step S53). When a positive determination is made, the vehicle-side ECU 50F determines whether the open/close door 103a is in the closed state (step S54).

When a positive determination is made in step S54, the vehicle-side ECU 50F controls the lock mechanism 103b to lock the open/close door 103a (step S55). Thereafter, the vehicle-side ECU 50F permits the operation of the generator unit 11 and the vehicle running (step S56). Thus, the operation of the generator unit 11 is started, and the electric motor 13 is operable in response to the depression of the acceleration pedal 5.
In contrast, when a negative determination is made in step S53 or S54, the vehicle-side ECU 50F performs the alarm control (step S57), and performs the operation restricting control of the generator unit 11 and the vehicle running (step S58). When a positive determination is made in step S52, the vehicle-side ECU 50F permits the vehicle to run irrespective of whether the open/close door 103a is in the closed state (step S59).

Functions and effects of the electrically powered vehicle 1G are now described. The electrically powered vehicle 1G is configured to mount the generator unit 11 in the partition space part 102. Thus, in the case where the vehicle interior 101 and the partition space part 102 are isolated from each other, even if exhaust leakage happens, it is possible to prevent the user from breathing in harmful gas components. In contrast, in the case where the vehicle interior 101 and the partition space part 102 communicate with each other, if exhaust leakage happens, the exhaust gas may leak to the vehicle interior 101 and the user may breath in the harmful gas components.

However, the electrically powered vehicle 1G stops exhausting by performing the operation restricting control of the generator unit 11 in the state where the vehicle interior 101 and the partition space part 102 communicate with each other, so that the safety against the exhaust leakage can be enhanced. Even when the operation restricting control of the generator unit 11 is not performed, the electrically powered vehicle 1G is capable of preventing the vehicle operation from continuing with the exhaust leakage before it happens because the operation restricting control of the vehicle running is executed in the state where the vehicle interior 101 1 and the partition space part 102 communicate with each other. This also enhances the safety against the exhaust leakage. In this regard, the electrically powered vehicle 1G is capable of more reliably enhancing the safety against the exhaust leakage by performing the operation restricting control of both the generator unit 11 and the vehicle running.

In the electrically powered vehicle 1G, the open/close door 103a is locked when the generator unit 11 is working. Thus, it is possible to prevent the open/close door 103a from being opened when the generator unit 11 that is working has exhaust leakage and to prevent the exhaust gas from leaking to the vehicle interior 101. Thus, even after the operation of the generator unit 11 is started, the electrically powered vehicle 1G is cable of enhancing the safety against the exhaust leakage. In this case, it is possible to prevent the occurrence of an accident resulting from a situation in which the user touches the generator unit 11 that is working and to enhance the safety of the vehicle.
The electrically powered vehicle 1G is configured not to perform the operation restricting control of the vehicle running in the case where the generator unit 11 is not mounted in the vehicle body 10E even if the open/close door 103a is in the opened state. Thus, the electrically powered vehicle 1G is capable of enhancing the safety of vehicle running while ensuring the safety against the exhaust leakage. Also, in this case, the partition space part 102 may be used as a storage space in and from which a baggage can be placed or removed when the vehicle is running, so that the convenience can be improved.

The electrically powered vehicle 1G is configured to perform the alarm control when the operation restricting control is performed. Thus, the electrically powered vehicle 1G is capable of notifying the user that the open/close door 103a should be closed even when the operation restricting control is performed.
The electrically powered vehicle 1G is configured to perform a similar operation restricting control in an additional case where the generator unit 11 is mounted and the connection of the high-voltage-system wires has an abnormality. Thus, the electrically powered vehicle 1G is capable of preventing a short-circuit from happening in the high-voltage-system wires in generation and further enhancing the safety of the vehicle.

If the partition space part 102 is not used for the storage space for baggage, the alarm control means may be realized to perform the alarm control in a case where the generator unit 11 is not mounted in the vehicle body 10E and the open/close door 103a is in the opened state. In this case, it is also possible to notify the user that the open/close door 103a should be originally closed.
A change similar to that applied to the electrically powered vehicle 1G based on the electrically powered vehicle 1C may be applied to the electrically powered vehicles 1D, 1E and 1F of Embodiments 4, 5 and 6. In this regard, the generator unit 11 may be detachably mounted in the vehicle interior 101 1 in such a manner that the partition space part 102 in which the generator unit 11 is installed is provided in the vehicle interior 101. In this case, the open/close door 103a may be provided as a lid-like open/close door that isolates the partition space part 102 from the vehicle interior 101 in the openable/closable state.

### Embodiment 8

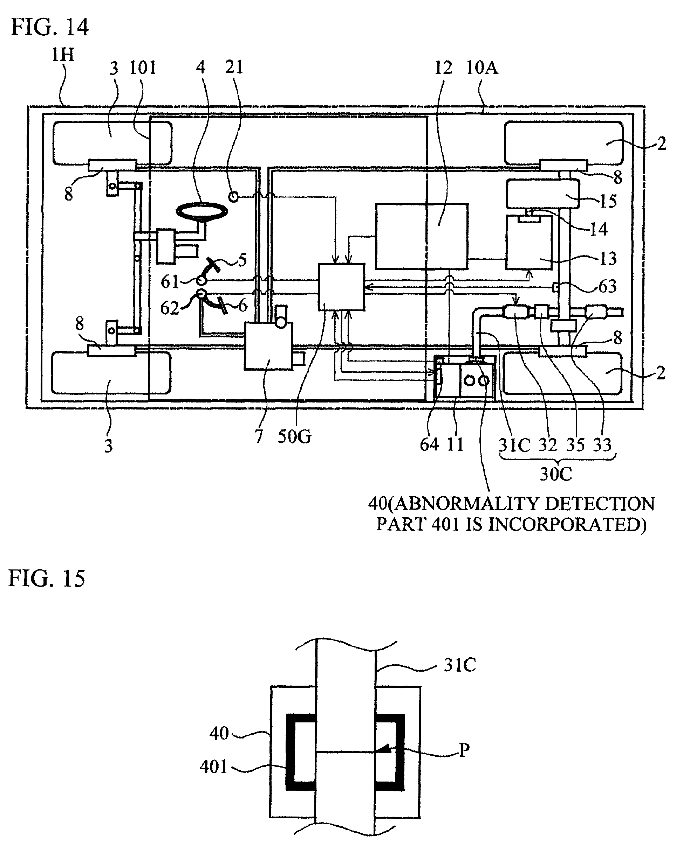

As illustrated in FIG. 14, an electrically powered vehicle 1H in accordance with the present embodiment is substantially the same as the electrically powered vehicle 1C except that the detachably attaching part 40 is further equipped with an abnormality detecting part 401, and a vehicle-side ECU 50G is substituted for the vehicle-side ECU 50A. A similar change may be applied to the electrically powered vehicles 1A and 1B.

The abnormality detecting part 401 is configured to be capable of detecting whether the detachably attaching part 40 is normally connected. Specifically, as depicted in FIG 15, the abnormality detecting part 401 is an air check mechanism capable of sensing air pressure in the vicinity of contact surfaces P in the detachably attaching part 40 in the exhaust pipe 31C, and is used together with the detachably attaching part 40 provided as a connecting structure capable of isolating the periphery of the contact surfaces P of the exhaust pipe 13C from the outside in the connected state. However, the abnormality detecting part 401 is not limited to the above, but may be, for example, a pressure sensor capable of sensing the surface pressure of the contact surfaces P of the detachably attaching part 40 or a connection sensing switch that is ON when the detachably attaching part 40 is normally connected in accordance with the concrete connection structure of the detachably attaching part 40.

The vehicle-side ECU 50G is substantially the same as the vehicle-side ECU 50A except that permission/inhibition deciding means described below is further realized functionally.
The permission/inhibition deciding means is configured to permit the operation of the generator unit 11 when the abnormality detection part 401 detects that the detachably attaching part 40 is normally connected in a state in which the generator unit 11 is mounted in the vehicle body 10A and to inhibit the operation of the generator unit 11 when the abnormality detection part 401 detects that the detachably attaching part 40 is not connected normally.
In this regard, the case where when the detachably attaching part 40 detects that the detachably attaching part 40 is normally connected corresponds to a case where the air pressure detected is lower than the predetermined value, and the case where the abnormality detecting part 401 detects that the detachably attaching part 40 is not connected normally corresponds to a case where the air pressure detected is equal to or higher than the predetermined value.

A description is now given of an operation of the vehicle-side ECU 50G in conjunction with a flowchart of FIG. 16. The vehicle-side ECU 50G determines whether the vehicle is started up (step S61). When a negative determination is made, no specific process is needed and the present flow process is ended. In contrast, when a positive determination is made in step S61, the vehicle-side ECU 50G determines whether the generator unit 11 is mounted in the vehicle body 10A (step S62). When a negative determination is made, the present flow process is ended. In contrast, when a positive determination is made in step S62, the vehicle-side ECU 50G starts the operation of the generator unit 11 (step S63). Subsequently, the vehicle-side ECU 50G determines whether the detachably attaching part 40 is connected normally (step S64). In a positive determination is made, the vehicle-side ECU 50G permits the operation of the generator unit 11 (step S65). In contrast, when a negative determination is made in step S64, the vehicle-side ECU 50G inhibits the operation of the generator unit 11 (step S66). When the operation is inhibited, the generator unit 11 that is working is stopped.

A description is now given of functions and effects of the electrically powered vehicle 1H. The electrically powered vehicle 1H detects whether the detachably attaching part 40 is normally connected and inhibits the operation of the generator unit 11 when the detachably attaching part 40 is not connected normally. Thus, the electrically powered vehicle 1H stops the operation of the generator unit 11 early, and is capable of more surely enhancing the safety against the exhaust leakage.
The electrically powered vehicle 1H is configured to stop the operation of the generator unit 11 early not only in a case where the generator unit 11 is mounted in the vehicle interior 101 but also in another case where the generator unit 11 is provided outside of the vehicle interior 101. Thus, the electrically powered vehicle 1H is capable of suppressing degradation of the environment in terms of environment problems and suitably enhancing the safety against the exhaust leakage.
The electrically powered vehicle 1H is required to start the operation of the generator unit 11 before the abnormality detection part 401 detects an abnormality in terms of the structure of abnormality detection, and is however capable of preventing the exhaust leaked from leaking to the outside even when the exhaust leakage happens in the contact surfaces P. Thus, the electrically powered vehicle 1H is capable of preventing the exhaust leaked from leaking to the outside even when the connection state of the detachably attaching part 40 is degraded due to vibration or the like during the operation of the generator unit 11, and is thus capable of suitably enhancing the safety against the exhaust leakage.

A change similar to that applied to the electrically powered vehicle 1H based on the electrically powered vehicle 1C may be applied to the electrically powered vehicles 1D, 1E, 1F and 1G of Embodiments 4 through 7. In this case, the safety against the exhaust leakage can be enhanced further because the safety measure against the exhaust leakage may function as a fail safe.

The above-described embodiments are exemplary preferred embodiments. However, the present invention is not limited to those embodiments but various embodiments and variations may be made without departing from the present invention.
For example, the above-described embodiments use EHC as the catalyst 32. However, the present invention is not limited to the above but includes another catalyst for cleaning the exhaust.
In Embodiment 2, two generator units 11 are detachably mounted as the plurality of generator units. However, the present invention is not limited to the above but the plurality of generator units may be mutually different generator units.
The various means functionally realized by each ECU on the vehicle side in the embodiments may be realized by hardware such as another electronic control unit and a dedicated electronic circuit or its combination.

### DESCRIPTION OF REFERENCE NUMERALS

- 1A, 1B, 1C, 1D, 1E, 1F, 1G, 1H: electrically powered vehicle
- 10A, 10B, 10C, 10D, 10E: vehicle body
- 101: vehicle interior
- 102: partition space part
- 103: open/close mechanism
- 11: generator unit
- 111: engine
- 12: battery
- 13: electric motor
- 21: key switch
- 30A, 30B, 30C, 30D: exhaust system assembly components
- 31A,31B,31C,31D: exhaust pie
- 32: catalyst
- 33: muffler
- 34: switch valve
- 35: thermal recovery device
- 40: detachably attaching part.
- 401: abnormality detecting part
- 50A, 50B, 50C, 50D, 50E, 50F, 50G: vehicle-side ECU
- 71: ventilator
- 72: power window device
- 73: electric sunroof device
- 74: wiper device

## Claims

1. An electrically powered vehicle comprising:
a vehicle body;
a battery mounted in the vehicle body and usable for running; and
a generator unit of engine driven type that is detachably mounted in the vehicle body and charges the battery,
at least some of exhaust system assembly components that form an exhaust system of an engine of the generator unit being mounted in the vehicle body.

2. The electrically powered vehicle according to claim 1, wherein the at least some of exhaust system assembly components include a catalyst for cleaning exhaust.

3. The electrically powered vehicle according to claim 2, wherein:
the catalyst is electrically heated catalyst; and
the electrically powered vehicle further comprises:
current supply control means for performing a current supply control to the electrically heated catalyst; and
current supply inhibiting means for inhibiting the current supply performed by the current supply control means when the generator unit is not mounted in the vehicle body.

4. The electrically powered vehicle according to claim 1, wherein the at least some of the exhaust system assembly components includes a heat recovery device that recovers exhaust heat discharged from the engine.

5. The electrically powered vehicle according to any of claims 1 to 4, wherein:
a vehicle interior is provided in the vehicle body; and
gas sensing means for sensing a gas component that leaks from the engine to the vehicle interior, and there is further provided operation restricting control means for performing a control of restricting an operation of at least either the generator unit or vehicle running.

6. The electrically powered vehicle according to claim 5, further comprising a detachably attaching part that detachably attach the generator unit to the at least some of the exhaust system assembly components,
the gas sensing means being provided in a position lower than that of the detachably attaching part.

7. The electrically powered vehicle according to claim 5, further comprising control content changing means for changing a content of the control performed by the operation restricting control means on the basis of an output of the gas sensing means.

8. The electrically powered vehicle according to claim 5, further comprising:
ventilation control means for ventilating the vehicle interior on the basis of the output of the gas sensing means; and
control content changing means for changing a content of the control performed by the ventilation control means on the basis of the output of the gas sensing means.

9. The electrically powered vehicle according to claim 8, wherein the control content changing means changes the content of the control performed by the ventilation control means on the basis of a vehicle speed.

10. The electrically powered vehicle according to any of claims 1 to 4, wherein:
a vehicle interior is provided in the vehicle body;
there is provided a partition space part that defines a space with which the vehicle interior communicates and from which the vehicle interior is isolated, and the generator unit is detachably mounted in the partition space part; and
there is further provided operation restricting control means for restricting an operation of at least either the generator unit or vehicle running in a case where the vehicle interior and the partition space part communicate with each other.

11. The electrically powered vehicle according to claim 10, further comprising:
opening/closing means for isolating the partition space part from the vehicle interior in an openable/closable state;
lock means capable of locking the opening/closing means in a state in which the opening/closing means is in a closed state; and
lock control means for locking the lock means to lock the opening/closing means when the generator unit is operating.

12. The electrically powered vehicle according to claim 11, further comprising control content changing means for performing a control of changing a content of the control performed by the operation restricting control means so as to lower a degree of restriction when the generator unit is not mounted in the vehicle body.

13. The electrically powered vehicle according to any of claims 1 to 4, further comprising:
a detachably attaching part that detachably connects the generator unit to the at least some of the exhaust system assembly components mounted in the vehicle body; and
abnormality detecting means capable of detecting whether the detachably attaching part is normally connected.

14. The electrically powered vehicle according to claim 13, further comprising permission/inhibition deciding means for permitting the operation of the generator unit when the abnormality detecting means detects that the detachably attaching part is normally connected and inhibiting the operation of the generator unit when the abnormality detecting means detects that the detachably attaching part is not connected normally.

15. The electrically powered vehicle according to any of claims 1 to 14, wherein
a plurality of cylinders are provided in the engine of the generator unit or engines of a plurality of generator units of engine driven type that include said generator unit and are detachably mounted, and wherein
the electrically powered vehicle further comprises:
operation changing means for performing a control of increasing or decreasing a number of cylinders that are to be operated among the plurality of generator units; and
output control mans for performing a control of reducing an output of a cylinder that is operating among the plurality of cylinders when the operation change means increases the number of cylinders to be operated.
